# EUROPÄISCHE PATENTSCHRIFT

(11) **EP 2 693 188 B1**
(45) Veröffentlichungstag und Bekanntmachung des Hinweises auf die Patenterteilung: **08.03.2017**
(21) Anmeldenummer: 12405074.1
(22) Anmeldetag: 30.07.2012
(51) Int. Cl.: G01N 1/22, G01N 1/40

(54) **Festphasenmikroextraktion**
Solid phase micro-extraction
Microextraction en phase solide

(43) Veröffentlichungstag der Anmeldung: 05.02.2014
(73) Patentinhaber: CTC Analytics AG, 4222 Zwingen (CH)
(72) Erfinder: Schüler, Kai Heinrich, 9114 Hoffeld (CH); Zumbach, Melchior, 5600 Lenzburg (CH); Schilling, Beat, 8038 Zürich (CH)
(74) Vertreter: Stäbler, Roman

(56) Entgegenhaltungen:
- WO-A1-91/15745
- US-A- 5 693 228
- US-A1- 2003 021 733
- US-A1- 2009 199 621
- US-A1- 2009 260 456
- "8200 CX AutoSampler Operator's Manual", , 1. Januar 1995 (1995-01-01), Seiten 1-88, XP055055065, USA Gefunden im Internet: URL:http://www.labexchange.com/products/pd fs/Varian/8200%20CX%20Autosampler%20operat or%60s%20Manual%20e.pdf [gefunden am 2013-03-04]

## Beschreibung

### Technisches Gebiet

Die Erfindung betrifft ein Verfahren zur Durchführung einer Festphasenmikroextraktion, sowie eine entsprechende Vorrichtung zur Durchführung einer Festphasenmikroextraktion und einen Adapter zur Aufnahme einer Vorrichtung zur Durchführung einer Festphasenmikroextraktion und zur Montage an eine Werkzeughalterung.

### Stand der Technik

Die Festphasenmikroextraktion, oder auch SPME (solid phase micro extraction) ist seit Anfang der 90er Jahren bekannt. Der Zentrale Teil der SPME-Vorrichtung ist typischerweise eine Faser oder Fiber. Diese kann in unterschiedlichen Formen vorliegen, wobei insbesondere die Polarität variiert wird. In Abhängigkeit der Polarität des Fiber-Materials kann im Verfahren ein Analyt mit im Wesentlichen derselben Polarität aus einer Matrix, welche sowohl gasförmig als auch flüssig sein kann, extrahiert werden. Der Analyt der Matrix reichert sich so an der Faser an, worauf der Analyt auf der Faser zum Beispiel in einen Gaschromatographen desorbiert und analysiert werden kann.

Die WO 91/15745 A1 (Supelco) betrifft eine Vorrichtung und ein Verfahren zur Festphasenmikroextraktion. Die Vorrichtung umfasst eine Spritze mit einer Fiber. Die Spritze umfasst einen Zylinder, in welchem ein Stössel verfahrbar angeordnet ist. Der Stössel umfasst ein Betätigungselement am einen Ende des Zylinders. Am anderen Ende des Zylinders ist eine Nadel angeordnet. Die Fiber verfährt in Längsrichtung, wenn der Stössel betätigt wird und ist teilweise in einem Metallgehäuse, welches die Fiber umgibt, enthalten. Das Metallgehäuse dient als Schutz für die Fiber.

Die EP 0 794 822 B1 (Varian) betrifft die Mikroextraktion in der Festphase mit Vibration. Eine SPME-Spritze umfasst eine Nadel mit einer Fiber und einen Kolben mit einem Stössel. Ein Ende der Fiber umfasst Mittel, welche gewährleisten, dass die Fiber mit dem Stössel im Kolben in Längsrichtung verfahrbar ist. Diese Mittel können als ein Tropfen Epoxid an der Fiber ausgebildet sein. Die Fiber ist teilweise von einer Schutzhülle umgeben. Nach der Probenaufnahme wird der Stössel zurückgefahren, womit die Fiber innerhalb der Schutzhülse in die Nadel zurückgeführt wird. Die Fiber ist innerhalb der Spritze befestigt und bewegt sich zusammen mit dem Kolben innerhalb des Zylinders. Die Hohlnadel ist mit dem Zylinder verbunden und enthält die Fiber. Die Faser streckt sich über das freie Ende der Nadel hinaus wenn der Kolben innerhalb des Zylinders herabgedrückt wird. Die Faser befindet sich innerhalb der Nadel, wenn der Kolben relativ zum Zylinder herausgezogen wird.

Die WO 2007/032039 A2 (Degli) betrifft eine automatische Vorrichtung für SPME, insbesondere für einen Gaschromatographen. Die Vorrichtung umfasst eine Hohlnadel, in welcher eine Fiber geführt ist. Über einen Kunststoffverbinder ist das eine Ende der Fiber an einem Stössel befestigt. Die Vorrichtung ist an einem kartesisch geführten Roboterkopf befestigt.

Die US 2003/021733 A1 (Andresen) betrifft eine Vorrichtung zur FestphasenMikroextraktion, insbesondere auf eine Hülse. Im Verfahren wird die Fiber aus der Nadel ausgefahren, worauf durch ein Loslassen des Stössels die Fiber über eine Rückstellkraft wieder in die Nadel gelangt. Die Hülse ersetzt dabei die Fiber, kann aber dennoch in herkömmlichen Fiber-Spritzen verwendet werden. Die Hülse kann aus Metall sein und weist Perforationen auf. Die Perforationen können maschinell durch Bohren, chemisch, chemo-mechanisch oder mit Laser hergestellt werden.

Die US 2009/199621 A1 (Land) betrifft eine Vorrichtung zur Durchführung einer Festphasenmikroextraktion. Durch ein Einführen des Stössels wird die Fiber über das Ende der Nadel hinausgeführt. Eine Hülse kann einen Analytfluss direkt auf die Fiber führen. Die Vorrichtung umfasst einen Grundkörper mit einem offenen Ende und einem zweiten Ende, in welches die Nadel der SPME geführt und die Fiber freigelegt wird. Das Probenmaterial wird nun durch die ESD hindurch, nämlich beim ersten Ende hinein und beim Auslass hinaus, geleitet.

Die bekannten Vorrichtungen zur Festphasenmikroextraktion haben jedoch den Nachteil, dass sie einen relativ grossen Platzbedarf aufweisen. Da die Fiber typischerweise fragil ist, besteht auch häufig die Gefahr, dass die Fiber während des Verfahrens, zum Beispiel vor, während oder nach der Analyse beschädigt wird.

### Darstellung der Erfindung

Aufgabe der Erfindung ist es, eine dem eingangs genannten technischen Gebiet zugehörende Vorrichtung zur Festphasenmikroextraktion zu schaffen, welche einen geringen Platzbedarf aufweist und robust ist.

Die Lösung der Aufgabe ist durch die Merkmale des Anspruchs 1 definiert. Gemäss der Erfindung wird im Verfahren zur Durchführung einer Festphasenmikroextraktion eine mit einer Extraktionsvorrichtung verbundene und an einem Adapter befestigte Haltevorrichtung gehalten, während eine mit einer Führungsvorrichtung verbundene Betätigungsvorrichtung verfahren wird, wobei die Haltevorrichtung die Extraktionsvorrichtung halt und wobei die Extraktionsvorrichtung zumindest teilweise in der Führungsvorrichtung geführt ist.

Während der Festphasenmikroextraktion (nachfolgend SPME genannt, nach dem englischen "solid phase micro extraction") ist also die Extraktionsvorrichtung bezüglich des Adapters vorzugsweise ortsfest gehalten. Dies hat den Vorteil, dass die Lage der Extraktionsvorrichtung eindeutig durch die Lage des Adapters bestimmbar ist. Während dem die Führungsvorrichtung betätigt wird, kann die Extraktionsvorrichtung in der Matrix ortsfest gehalten werden. Damit kann verhindert werden, dass die Extraktionsvorrichtung den Behälter kontaktiert und dadurch das Messresultat verfälscht oder sogar die Extraktionsvorrichtung beschädigt wird. Dieser Vorteil kommt insbesondere bei handbetätigter Vorrichtung zum Tragen.

In einer bevorzugten Ausführungsform ist der Adapter an einem Roboterarm, insbesondere an einem Roboterarm eines automatischen Analysengeräts, befestigbar. Durch ein Verfahren des Adapters, zum Beispiel mittels eines Roboterarms, können damit überlagerte Bewegungen vollzogen werden, so dass ein Ortsfesthalten der Betätigungsvorrichtung und gleichzeitiges Verfahren der Haltevorrichtung simuliert werden kann. Dazu kann zum Beispiel der Adapter in eine Richtung verfahren werden, während die Betätigungsvorrichtung in die entgegen gesetzter Richtung verfahren wird.

Eine Vorrichtung zur Durchführung einer Festphasenmikroextraktion umfasst eine Betätigungsvorrichtung, verbunden mit einer Führungsvorrichtung und eine Haltevorrichtung, verbunden mit einer Extraktionsvorrichtung, wobei die Extraktionsvorrichtung zumindest teilweise in der Führungsvorrichtung geführt ist und wobei die Extraktionsvorrichtung relativ zur Führungsvorrichtung mittels einer Betätigung der Betätigungsvorrichtung verfahrbar ist.

Die Betätigungsvorrichtung ist mit der Führungsvorrichtung verbunden. Damit kann in der Verwendung die Führungsvorrichtung betätigt werden, während die Haltevorrichtung und die Extraktionsvorrichtung ortsfest bleiben. Die Extraktionsvorrichtung ist teilweise innerhalb der Führungsvorrichtung geführt und damit auch durch die Führungsvorrichtung geschützt. Die Extraktionsvorrichtung kann durch Betätigung der Betätigungsvorrichtung, bevorzugt linear, relativ zur Führungsvorrichtung verfahren werden.

Die Verbindung zwischen der Betätigungsvorrichtung und der Führungsvorrichtung, sowie zwischen der Haltevorrichtung und der Extraktionsvorrichtung kann fix oder lösbar sein. Eine lösbare Befestigung zwischen diesen Elementen kann von Vorteil sein, da damit bei Defekten oder Abnutzung einzelne Teile ausgetauscht werden können, womit die Wartung kostengünstiger wird.

Vorzugsweise wird die Betätigungsvorrichtung von einer ersten Position, in welcher die Extraktionsvorrichtung nicht über ein distales Ende der Führungsvorrichtung hinausragt, in eine zweite Position, in welcher die Extraktionsvorrichtung zumindest teilweise über ein distales Ende der Führungsvorrichtung hinausragt, überführt.

Diese Verfahrensweise hat den Vorteil, dass die Extraktionsvorrichtung während eines Transports durch die Führungsvorrichtung geschützt werden kann. Der Transport erfolgt dabei typischerweise zwischen einer zu analysierenden Probe und einem Analysengerät. Während dem Extrahieren mit der Extraktionsvorrichtung ragt typischerweise die Extraktionsvorrichtung über die Führungsvorrichtung hinaus, das heisst, die Betätigungsvorrichtung ist in der zweiten Position.

Nach erfolgter Extraktion des zu untersuchenden Analyten aus der Matrix wird die Betätigungsvorrichtung bevorzugt von der zweiten Position in die erste Position überführt, so dass die Extraktionsvorrichtung nicht mehr über das distale Ende der Führungsvorrichtung hinausragt. In diesem Zustand kann die in der Führungsvorrichtung liegende Extraktionsvorrichtung geschützt zu einem Analysengerät transportiert werden. Dadurch, dass die Extraktionsvorrichtung während des Transports nicht über die Führungsvorrichtung hinausragt, wird verhindert, dass weitere Stoffe durch die Extraktionsvorrichtung aufgenommen, respektive dass extrahierte Stoffen durch die Extraktionsvorrichtung abgegeben werden können. Schliesslich wird damit eine Verfälschung von Analysenresultaten weitgehend vermieden.

Vorzugsweise erfolgt die Überführung von der ersten in die zweite Position durch eine Betätigung der Betätigungsvorrichtung, welche mit der Führungsvorrichtung verbunden ist.

Die Betätigung dieser Vorrichtung erfolgt damit vorzugsweise umgekehrt im Vergleich zu einer herkömmlichen SPME-Spritzenvorrichtung, bei welchen typischerweise über ein Betätigungselement eine Extraktionsvorrichtung (Fiber) betätigt wird.

Vorzugsweise umfasst die Betätigungsvorrichtung ein Betätigungselement und die Haltevorrichtung ein Halteelement, wobei in einer Längsrichtung der Vorrichtung das Betätigungselement proximal zum Halteelement angeordnet ist.

Die Vorrichtung umfasst also bevorzugt ein Halteelement und ein dazu proximal angeordnetes Betätigungselement, womit die Vorrichtung prinzipiell wie eine herkömmliche Spritze betätigt werden kann. Im Unterschied wird aber durch die Betätigung des Betätigungselements nicht ein Kolben bewegt, sondern die Betätigungsvorrichtung, welche wiederum mit der Führungsvorrichtung verbunden ist.

Gleichzeitig wird die Vorrichtung am Halteelement gehalten, womit bei Betätigung des Betätigungselements die mit dem Halteelement verbunden Haltevorrichtung und damit auch die Extraktionsvorrichtung gehalten sind. Durch den spritzenähnlichen Aufbau besteht die Möglichkeit, die Vorrichtung für bestehende automatische Analysengeräte, welche für Spritzen ausgelegt sind, auszubilden. Diese Vorrichtung kann somit als Austauschmodul für eine Spritze ausgebildet sein.

Dem Fachmann ist allerdings klar, dass das Betätigungselement nicht zwingend proximal zum Halteelement angeordnet sein muss. Die Betätigungsvorrichtung kann zum Beispiel auch mit einem Betätigungselement verbunden sein, welches seitlich oder anderweitig zur Betätigungsvorrichtung angeordnet ist.

Die Haltevorrichtung ist bevorzugt am Betätigungselement geführt. Damit wird eine besonders einfache Führung der Haltevorrichtung relativ zum Betätigungselement erreicht.

In Varianten kann das Betätigungselement auch derart angeordnet sein, dass kein Berührungskontakt mit der Haltevorrichtung erfolgt.

Vorzugsweise sind die Führungsvorrichtung als Kanüle und die Extraktionsvorrichtung als Fiber ausgebildet und die Betätigungsvorrichtung umfasst bevorzugt einen Zylinder, in welchem die Haltevorrichtung in Längsrichtung verfahrbar ist. Im Betrieb werden damit der Zylinder sowie die mit dem Zylinder verbundene Kanüle verfahren.

Die Betätigungsvorrichtung muss nicht zwingend als Zylinder vorliegen. Es kann durchaus ausreichen, wenn die Betätigungsvorrichtung Führungselemente umfasst, durch welche die Haltevorrichtung in Längsrichtung geführt werden kann. Diese Führung kann zum Beispiel als Schwalbenschwanzführung realisiert sein. Dem Fachmann sind auch weitere Variationen bekannt.

Bevorzugt ist der Zylinder über ein Befestigungselement mit dem Betätigungselement verbunden, wobei das Befestigungselement insbesondere in einem proximalen Bereich des Zylinders an einer Innenseite des Zylinders angeordnet ist und vorzugsweise radial nach innen ragt. Damit kann in besonders kompakter Weise das Betätigungselement mit der Betätigungsvorrichtung verbunden werden. Somit ist bevorzugt das Betätigungselement am Halteelement geführt und mit dem Zylinder fest verbunden.

In Varianten kann das Befestigungselement auch an einer Aussenseite der Betätigungsvorrichtung, respektive des Zylinders befestigt sein. Weiter kann auch das Betätigungselement direkt mit der Betätigungsvorrichtung verbunden oder mit dieser einstückig ausgebildet sein.

Vorzugsweise ist die Haltevorrichtung als Stössel mit einem axial verlaufenden Schlitz für das Befestigungselement und einer axialen, vorzugsweise zentralen, Bohrung für die Haltevorrichtung ausgebildet. Damit kann der Stössel (welcher im Betrieb ortsfest gehalten ist) verfahrbar im Zylinder sowie am Betätigungselement, welches mit dem Zylinder verbunden ist, geführt sein.

In einer besonders bevorzugten Ausführungsform ist der Stössel koaxial zum Zylinder innerhalb des Zylinders verfahrbar geführt. Der Stössel wiederum ist koaxial zum Betätigungselement an demselben geführt. Dazu umfasst der Stössel vorzugsweise eine axiale Bohrung, über welche der Stössel am Betätigungselement geführt ist. Damit wird erreicht, dass die Kraftwirkungen jeweils auf derselben Linie liegen, womit während des Betriebs kein Biegemoment auf die Vorrichtung wirkt.

Weiter umfasst der Stössel vorzugsweise mindestes einen axialen Schlitz, durch welchen hindurch das Betätigungselement mit dem Zylinder verbunden ist.

In Varianten kann auf die axiale Bohrung im Stössel auch verzichtet werden. In diesem Fall können zum Beispiel der Stössel und das Betätigungselement jeweils im Querschnitt eine halbkreisförmig und dadurch im Zylinder nebeneinander angeordnet sein. Insbesondere kann das Betätigungselement in diesem Fall auch einstückig mit dem Zylinder ausgebildet sein.

Bevorzugt wird die Betätigungsvorrichtung mit einem Motorantrieb von der ersten Position zur zweiten Position überführt. Damit wird eine besonders einfach zu kontrollierende Überführung von der ersten in die zweite Position erreicht. Der Motorantrieb kann zum Beispiel einen Elektromotor umfassen. Die Umsetzung der Drehbewegung in eine lineare Bewegung kann mittels Spindel, Zahnstange und dergleichen erfolgen. Die Steuerung des Motors erfolgt vorzugsweise gemäss der deutschen Patentanmeldung DE 10 2009 022 314 A1. Dem Fachmann sind weitere motorische Antriebe und Motorsteuerungen bekannt, welche für die vorliegend Anwendung geeignet sind.

Besonders bevorzugt erfolgt die motorische Betätigung der Betätigungsvorrichtung von einer ersten Position, in welcher die Extraktionsvorrichtung nicht über ein distales Ende der Führungsvorrichtung hinausragt, in eine zweite Position, in welcher die Extraktionsvorrichtung zumindest teilweise über ein distales Ende der Führungsvorrichtung hinausragt. Damit kann das "freilegen" der Extraktionsvorrichtung motorisch kontrolliert werden.

In Varianten kann die Überführung von der ersten Position in die zweite Position auch anderweitig, insbesondere Handbetätigt, pneumatisch, hydraulisch erfolgten.

Vorzugsweise wird die Betätigungsvorrichtung von einer zweiten Position, in welcher die Extraktionsvorrichtung zumindest teilweise über ein distales Ende der Führungsvorrichtung hinausragt, in eine erste Position, in welcher die Extraktionsvorrichtung nicht über ein distales Ende der Führungsvorrichtung hinausragt, unter Einwirkung der Schwerkraft verfahren.

Die entsprechende Vorrichtung ist vorzugsweise so beschaffen, dass bei abgeschaltetem Antrieb unter Einwirkung der Schwerkraft automatisch die erste Position, in welcher die Extraktionsvorrichtung nicht über ein distales Ende der Führungsvorrichtung hinausragt, eingenommen wird. Dies hat den Vorteil, dass die Extraktionsvorrichtung in einem stromlosen zustand in jedem Fall durch die Führungsvorrichtung geschützt sein kann.

Die Überführung der Betätigungsvorrichtung von der zweiten Position zur ersten Position muss allerdings nicht zwingen ausschliesslich unter Einwirkung der Schwerkraft erfolgen. Die Vorrichtung umfasst vorzugsweise zusätzlich einen motorischen Antrieb für diese Bewegung. In diesem Fall kann die Vorrichtung für die Überführung der Betätigungsvorrichtung zwischen der ersten und der zweiten Position (d.h. für die Überführung von der ersten zur zweiten Position, wie auch für die Überführung von der zweiten zur ersten Position) genau einen motorischen Antrieb umfassen.

In Varianten kann auf die Ausnutzung der Schwerkraft für die Überführung von der zweiten zur ersten Position auch verzichtet werden.

In einer bevorzugten Ausführungsform wird die Vorrichtung an einem Adapter montiert. Ein Adapter zur Aufnahme einer Vorrichtung zur Durchführung einer Festphasenmikroextraktion und zur Montage an eine Werkzeughalterung, insbesondere an eine Werkzeughalterung eines automatischen Analysengeräts umfasst eine Befestigungsvorrichtung zum Befestigen der Haltevorrichtung und eine Kopplungsvorrichtung zum Ankoppeln des Adapters an die Werkzeughalterung.

Der Adapter zusammen mit der SPME-Vorrichtung bildet ein Werkzeug, welches vorzugsweise für ein automatisches Analysengerät eingesetzt werden kann. Bevorzugt ist das Werkzeug als ganzes austauschbar. Das Werkzeug kann in weiteren Ausführungsformen auch zum Beispiel eine Spritze umfassen, so dass das Analysengerät variabel eingesetzt werden kann, wobei vorzugsweise sowohl für die SPME-Vorrichtung als auch für die Spritze ein ähnlicher Adapter mit denselben Kopplungsteilen für die Werkzeughalterung eingesetzt wird. Bevorzugt handelt es sich beim Werkzeug um das in der EP 2 261 676 A1 beschriebene Werkzeug, mit dem Unterschied, dass statt einer Spritze eben eine SPME-Vorrichtung eingesetzt ist.

Die einzelnen Werkzeuge können zwischenzeitlich, wenn sie nicht verwendet werden, automatisch durch das Analysengerät, durch den Autosampler, insbesondere durch einen, zum Beispiel kartesischen, Roboterarm der vorgenannten Geräten, oder von Hand in einer Parkstation abgelegt werden.

Vorzugsweise ist während der Betätigung der Betätigungsvorrichtung die Betätigungsvorrichtung relativ zur Haltevorrichtung verfahrbar und die Haltevorrichtung relativ zur Werkzeughalterung fixiert. Damit ist insbesondere die Extraktionsvorrichtung relativ zur Werkzeughalterung fixiert, womit die Extraktionsvorrichtung direkt über die Positionierung des Adapters kontrollierbar ist. Damit wird eine Steuerung der Vorrichtung vereinfacht.

Bevorzugt ist die Betätigungsvorrichtung in beide Betätigungsrichtungen motorisch betätigbar. Damit kann die Bewegung der Betätigungsvorrichtung optimal kontrolliert werden.

Vorzugsweise umfasst die Vorrichtung eine Steuerung für das Werkzeug, welche derart beschaffen ist, dass bei einem Abschaltvorgang, insbesondere vor dem Abkoppeln des Werkzeugs von der Werkzeughalterung, die Betätigungsvorrichtung in einer Betätigungsrichtung von der zweiten Position in die erste Position betätigt wird. Dabei wird die Betätigungsvorrichtung vorzugsweise motorisch von der zweiten Position, in welcher die Extraktionsvorrichtung zumindest teilweise über ein distales Ende der Führungsvorrichtung hinausragt, in die erste Position, in welcher die Extraktionsvorrichtung nicht über ein distales Ende der Führungsvorrichtung hinausragt, verfahrbar. Diese Ausbildung der Vorrichtung hat den Vorteil, dass beim Ablegen des Werkzeugs in der Parkstation unabhängig vom Anfangszustand ein definierter Endzustand erreicht wird, nämlich die erste Position, in welcher die Extraktionsvorrichtung durch die Führungsvorrichtung geschützt und in welcher das Werkzeug als Ganzes besonders kompakt ist. Dies hat den weiteren Vorteil, dass beim erneuten Ergreifen, respektive Ankoppeln die Kopplungsteile in eindeutiger weise positioniert sind, so dass der Ankoppelungsvorgang reibungslos erfolgen kann.

Bevorzugt ist zur Betätigung, insbesondere in beide Bewegungsrichtungen, ein motorischer Antrieb vorgesehen, so dass die Betätigung kontrolliert werden kann.

Vorzugsweise umfasst der Adapter weiter eine Führung für die Führungsvorrichtung, respektive eine Kanülenführung, welche relativ zur Haltevorrichtung verfahrbar ist. Bevorzugt wird die Kanülenführung parallel zur Betätigung des Betätigungselements verfahren, kann aber auch unabhängig von der Betätigungsvorrichtung der SPME-Vorrichtung verfahren werden. Letztere Eigenschaft hat den Vorteil, dass die Kanülenführung beim Einstechen der Kanüle in ein Septum so verfahren werden kann, dass die Kanülenführung die Kanüle während dieses Prozesses jeweils nahe am Septum stützt und so eine Beschädigung der Kanüle durch Biegekräfte verhindert.

In Varianten kann die SPME-Vorrichtung selbst die Kanülenführung umfassen. Anderseits kann aber auf die Kanülenführung auch verzichtet werden.

Bei den bekannten Werkzeugen muss der Stössel hochgezogen werden um die Fiber durch die Kanüle zu schützen. Moderne Autosampler werden nämlich typischerweise mit verschiedenen Werkzeugen verwendet, unter Anderem mit Spritzen. Daher sind die Werkzeuge und die Werkzeughalterung typischerweise derart ausgebildet, dass beim Abkoppeln eines, eine Spritze umfassenden Werkzeugs, der Stössel in die Spritze eingefahren, respektive in der unteren Position ist. Damit ist das Werkzeug für das Ablegen in einer Parkstation kompakter und benötigt weniger Platz.

Wenn nun SPME-Vorrichtungen als Werkzeug für denselben Autosampler eingesetzt werden sollen, besteht grundsätzlich das Problem, dass bei herkömmlichen SPME-Vorrichtung die Fiber bei eingefahrenem Stössel exponiert ist und damit einerseits viel Platz beansprucht und anderseits die Fiber kontaminieren oder beschädigt werden kann. Daher wird bevorzugt die Führungsvorrichtung, respektive die Kanüle mit dem Spritzenkörper verfahren, statt (wie üblich) der Stössel mit der Fiber. Damit kann bei eingefahrenem Betätigungselement (welches eben durch die Kanüle und den Spritzenkörper gebildet ist) die, bezüglich der Werkzeughalterung ortsfeste Fiber durch die Kanüle abgedeckt und geschützt werden. Das heisst, bei ausgekuppeltem Werkzeug (auch Tool genannt) mit SPME-Vorrichtung ist die Fiber durch die Kanüle geschützt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: eine schematische Darstellung eines Schnittes entlang einer Längsachse einer Vorrichtung zur Durchführung einer Festphasenmikroextraktion, wobei die Fiber durch die Kanüle abgedeckt ist;
- Fig. 1b: eine schematische Darstellung gemäss Figur 1a bei nicht abgedeckter Fiber;
- Fig. 2a: eine schematische Darstellung eines Werkzeugs umfassend eine Vorrichtung zur Durchführung einer Festphasenmikroextraktion und einen Adapter wobei die Fiber nicht abgedeckt ist; und
- Fig. 2b: eine schematische Darstellung eines Werkzeugs gemäss Figur 2a, wobei die Fiber durch die Kanüle abgedeckt ist.

Grundsätzlich sind in den Figuren gleiche Teile mit gleichen Bezugszeichen versehen.

### Wege zur Ausführung der Erfindung

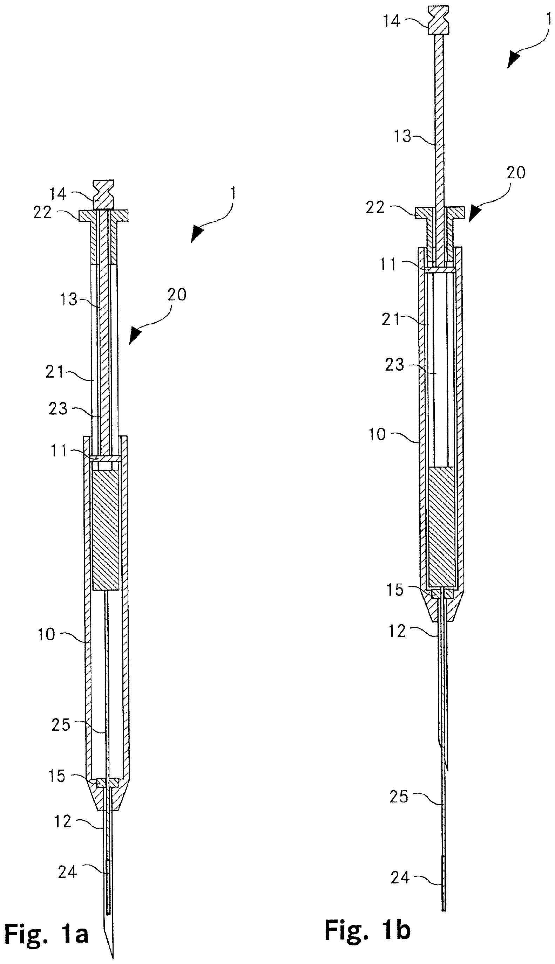

Die Figur 1a zeigt eine schematische Darstellung eines Schnittes entlang einer Längsachse einer Vorrichtung 1 zur Durchführung einer Festphasenmikroextraktion mit einer an einem Draht 25 befestigten Fiber 24, einer Kanüle 12, einem Zylinder 10 sowie einem Stössel 20, wobei die Fiber 24 durch die Kanüle 12 abgedeckt ist. In diesem Zustand befindet sich die Vorrichtung 1 während des Transports zwischen der Extraktion und dem Analysengerät, sowie in der Parkstation.

Die Vorrichtung 1 umfasst einen Stössel 20, welcher eine kreiszylindrische Grundform aufweist. In einem distalen Abschnitt des Stössels 20, welcher ungefähr einen Drittel der Länge des Stössels 20 umfasst, ist der Stössel als rundum geschlossener Zylinder ausgebildet. In diesem Abschnitt ist der Stössel 20 mit dem Draht 25 verbunden, welcher am distalen Ende die Fiber 24 umfasst.

In einem sich dem distalen Abschnitt in proximaler Richtung anschliessenden mittleren Abschnitt, welcher ungefähr die halbe Länge des Stössels 20 umfasst, sind zwei in Längsrichtung verlaufende schlitzartige Öffnungen 21 vorgesehen, welche bezüglich des Stössels 20 durchgehend ausgebildet ist. Die schlitzartige Öffnung 21 ist seitlich am Stössel als durchgängige Öffnung ausgebildet. Diese dient als Aussparung für einen Steg 11 im Zylinder 10 (siehe unten). Die Figur 1 zeigt den Schnitt durch diese schlitzartige Öffnung 21, womit dieser Bereich nicht schraffiert ist.

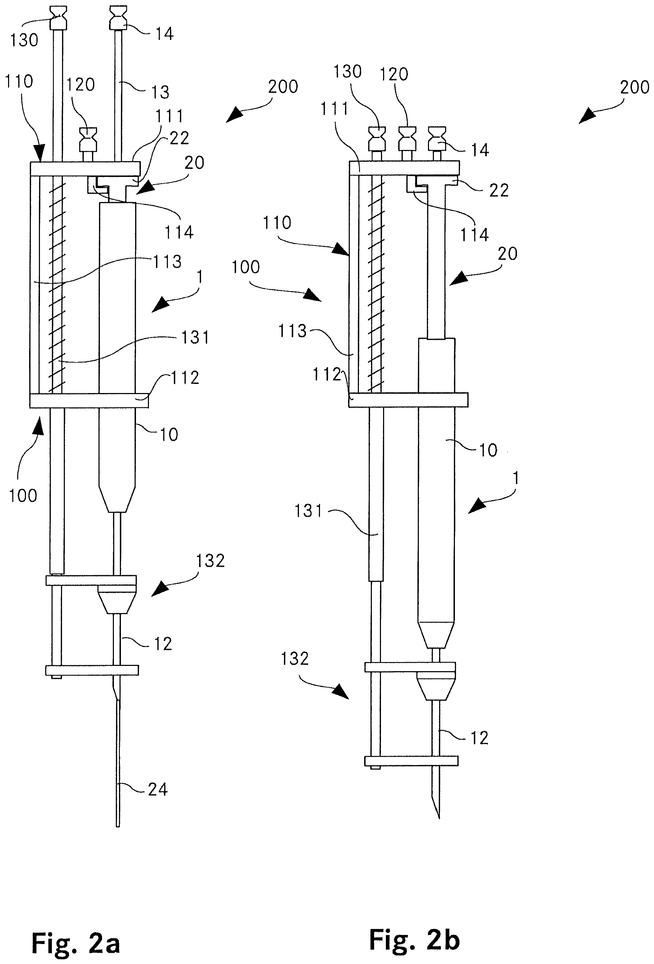

An den mittleren Bereich des Stössels 20 schliesst sich in proximaler Richtung ein Endbereich an, welcher ungefähr einen Sechstel der Länge des Stössels 20 umfasst. Dieser Endbereich ist wiederum als geschlossener Hohlzylinder ausgebildet und umfasst am proximalen Ende einen radial nach aussen ragenden Flansch 22, welcher im Werkzeug 100 (siehe unten zur Figur 2a) als Halteelement dient.

Der Stössel 20 weist vom mittleren bis zum proximalen Bereich eine durchgehende axiale und zentrale Bohrung 23 auf, welche im proximalen Bereich des Stössels 20, das heisst im Flansch 22, mündet.

Der Zylinder 10 weist die Form eines hohlen Kreiszylinders auf, welcher am distalen Ende über einen Absatz verjüngt ist. In diesem Bereich umfasst der Zylinder 10 eine Dichtung 15, in welcher der Draht 25 geführt ist. Die Dichtung 15 ermöglicht ein gasdichtes Abschliessen der Kanüle. Der Innendurchmesser des Zylinders 10 ist derart bemessen, dass der Stössel 20 darin im Wesentlichen spielfrei geführt und verschiebbar ist. Bei der Verjüngung am distalen Ende ist die Kanüle 12 befestigt. In einem proximalen Bereich des Zylinders 10 umfasst dieser einen Steg 11, welcher rechtwinklig zu einer Längsrichtung, mittig innerhalb des Zylinders 10 orientiert ist. Der Steg 11 ist stiftartig ausgebildet. Weiter umfasst der Zylinder 10 ein stabförmiges Betätigungselement 13, welches mit dem einen Ende mit dem Steg 11 verbunden ist und über das proximale Ende des Zylinders 10 hinausragt. Am proximalen Ende des Betätigungselements 13 ist ein Kopplungsteil 14 angeordnet, welches kreiszylindrisch ausgebildet ist und eine umlaufende Kerbe umfasst. Das Betätigungselement 13 dient zur Betätigung, das heisst, zum Verfahren der als Zylinder 10 ausgebildeten Betätigungsvorrichtung.

Die Figur 1 b zeigt eine schematische Darstellung eines Schnittes entlang einer Längsachse einer Vorrichtung 1 zur Durchführung einer Festphasenmikroextraktion im Wesentlichen gemäss Figur 1 a, wobei aber die Betätigungsvorrichtung, das heisst, der Zylinder 10 über das Betätigungselement 13 in proximaler Richtung verfahren ist, so dass ein distaler Bereich der Fiber 24 freigelegt ist. Der Übergang vom Zustand gemäss Figur 1a zum Zustand gemäss Figur 1b erfolgt namentlich durch proximales Zurückziehen des Zylinders 10 mittels des Kopplungsteils 14, während der Stössel 20 ortsfest gehalten ist. Dies wird durch einen motorischen Antrieb des Analysengeräts, respektive des Autosamplers realisiert, an welchem das Werkzeug angekoppelt ist.

In diesem Zustand befindet sich die Vorrichtung 1 typischerweise während der Extraktion des Analyten aus der Matrix (z. B. in einem Vial), respektive im Analysengerät während des Verdampfens oder Lösens des in der Fiber 24 aufgenommenen Analyten in einem Gas-oder Flüssigchromatographen (GC, HPLC, LC oder dergleichen). Bevor die Vorrichtung 1 in diesem Zustand in eine Parkstation überführt wird, wird der Zylinder 10 zusammen mit dem Betätigungselement 13 und dem Kopplungsteil 14 und der Kanüle 12 motorisch nach unten verfahren, so dass einerseits die Fiber 24 durch die Kanüle 12 geschützt ist und anderseits die Vorrichtung 1 in der Parkstation einen möglichst geringen Platzbedarf aufweist.

Die Figur 2a zeigt eine schematische Darstellung eines Werkzeugs 200 umfassend eine Vorrichtung 1 zur Durchführung einer Festphasenmikroextraktion und einen Adapter 100 wobei die Fiber 24 nicht abgedeckt, sondern freigelegt ist. Dies ist auch daran ersichtlich, dass der Kopplungsteil 14 proximal nach oben gefahren ist.

Der Adapter 100 umfasst eine C-förmige Halterung 110 mit einer ersten, oberen 111 und zweiten, unteren Leiste 112, welche zueinander parallel und beabstandet orientiert sind und über eine zu den beiden Leisten rechtwinklig angeordneten Halteleiste 113 miteinander verbunden sind. In Bezug auf die C-Form an der Innenseite der ersten Leiste 111 der Halterung 110 ist ein Halteteil 114 zum Halten, respektive zum Befestigen des Flanschs 22 des Stössels 20 angebracht. Dieser Halteteil 114 ist zwecks eines besseren Überblicks lediglich schematisch angedeutet. Die erste Leiste 111 umfasst weiter eine Öffnung, in welcher das Betätigungselement 13 verschieblich geführt ist. Gegenüberliegend umfasst die zweite Leiste 112 eine Öffnung, in welcher der Zylinder 10 verschieblich geführt ist.

Der Adapter 100 umfasst weiter einen Kopplungsteil 120, welcher formgleich ausgebildet ist wie der Kopplungsteil 14 des Betätigungselements 13. Der Kopplungsteil 120 dient zum ankoppeln an ein Analysengerät, respektive an einen Roboterarm eines Analysengeräts (nicht dargestellt) und ist fix mit der Halterung 110 verbunden. Über diesen Kopplungsteil 120 wird das Werkzeug 200 als ganzes verfahren.

An der Halterung 110 ist schliesslich ein Kopplungsteil 130 in Längsrichtung verfahrbar geführt und über eine, durch gegenüberliegende Öffnungen in der ersten und der zweiten Leiste geführte Stange 131 verbunden. Am distalen Ende der Stange 131 ist diese mit einer Kanülenführung 132 verbunden. Der Kopplungsteil 130 wird ebenfalls am Analysengerät oder Autosampler, respektive am Roboterarm angekoppelt. Die Kanülenführung 132 ist unabhängig von der Betätigung des Betätigungselements 13 über den Kopplungsteil 130 betätigbar und kann damit derart gesteuert werden, dass die Kanülenführung 132 zum Beispiel parallel zur Betätigung des Betätigungselements 13 und somit des Zylinders 10 und der Kanüle 12, nachgeführt wird. Da die Kanülenführung 132 aber unabhängig ansteuerbar ist, kann diese zum Beispiel auch vor dem Einstechen der Kanüle 12 in ein Septum, nahe an das distale Ende der Kanüle 12 hinunter gefahren werden, so dass die Kanüle 12 während dem Einstechen optimal gestützt ist, aber gleichzeitig mit zunehmender Einfahrtiefe (realisiert durch den Roboterarm) zurückgefahren werden kann, um eine Kollision mit dem Septum oder dem Vial zu verhindern.

Die Figur 2b zeigt schliesslich eine schematische Darstellung eines Werkzeugs 200 gemäss Figur 2a, wobei die Fiber 24 durch die Kanüle 12 abgedeckt ist. Sowohl der Kopplungsteil 14 als auch der Kopplungsteil 130 sind in distaler Richtung nach unten verfahren.

Durch das distale Verfahren des Kopplungsteils 14 wird, wie schon in Bezugnahme zu den Figuren 1a und 1b erläutert, der Zylinder 10 mit der Kanüle 12 nach unten verfahren, so dass die Kanüle 12 die Fiber 24, welche in der Figur 2b daher nicht mehr ersichtlich ist, abdeckt. Gleichzeitig wird auch die Kanülenführung 132 über den Kopplungsteil 130 nach unten gefahren.

Bevor das Werkzeug 200 in einer Parkstation abgestellt wird, wird ausgehend vom Zustand gemäss Figur 2a, (das heisst bei freigelegter Fiber 24), der Zylinder 10 motorisch nach unten verfahren, so dass sich die Kanüle 12 über die Fiber 24 schiebt um letztere bei Nichtgebrauch zu schützten. Weiter ist im Vergleich zur Figur 2a ersichtlich, dass das Werkzeug 200, respektive die Vorrichtung 1 in diesem Zustand weniger Platz beansprucht. Schliesslich sind die Kopplungsteile 14, 120, 130 in klar definierter Stellung, womit die Positionierung für ein erneutes Ankoppeln besonders einfach erreichbar ist.

In einer bevorzugten Ausführungsform ist auch die Kanülenführung 132 motorisch absenkbar, so dass in der Parkstation sowohl der Kopplungsteil 14 als auch der Kopplungsteil 130 nach unten verfährt.

Im vorliegenden Ausführungsbeispiel ist die Betätigungsvorrichtung als Zylinder 10, die Führungsvorrichtung als Kanüle 12, die Haltevorrichtung als Stössel 20, die Extraktionsvorrichtung als Fiber 24 und das Halteelement als Flansch 22 ausgebildet. Dem Fachmann ist allerdings klar, dass die einzelnen Elemente geometrisch nicht auf das beschriebene Ausführungsbeispiel einzuschränken sind, sondern in beliebiger Weise auch modifiziert werden können, ohne aus dem Grundgedanken der Erfindung auszutreten.

Der Stössel 20 kann auch ohne axiale Bohrung 23 ausgebildet sein. In diesem Fall kann der Kopplungsteil 14 über eine axiale und aussenmittig am Zylinder 10 angebrachte Leiste befestigt sein, so dass das Betätigungselement 13 und der Stössel 20 nicht koaxial orientiert sind.

Der Stössel 20 ist vorzugsweise einstückig, zum Beispiel aus einem Kunststoff ausgebildet, kann aber auch aus mehreren Teilen ausgebildet sein. Anderseits kann der Stössel 20 auch aus zwei, zum Beispiel durch Spritzguss hergestellten Hälften bestehen, welche anschliessend verschweisst werden. Die einzelnen Teile der Vorrichtung sind vorzugsweise aus Kunststoff gebildet, können aber auch Teile aus Metall, Metalllegierungen oder Verbundmaterialien umfassen. Insbesondere besteht die Kanüle 12 vorzugsweise aus Metall. Statt des Drahtes 25 kann auch eine innere, insbesondere metallische Kanüle vorgesehen sein, in welcher die Fiber respektive eine beschichtete Faser geführt ist. Die Fiber ist vorzugsweise bezüglich der inneren Kanüle fix angeordnet und kann insbesondere damit verbunden sein. Die innere Kanüle dient in diesem Fall als Schutz, insbesondere Knickschutz für die Fiber.

Zusammenfassend ist festzustellen, dass mit dem erfindungsgemässen Verfahren, sowie der SPME-Vorrichtung ein besonders kompaktes und variabel einsetzbares Werkzeug geschaffen wird.

## Patentansprüche

1. Verfahren zur Durchführung einer Festphasenmikroextraktion mit einer eine Extraktionsvorrichtung (24) haltenden und an einem Adapter (100) befestigten Haltevorrichtung (20), verbunden mit der Extraktionsvorrichtung (24) und einer mit einer Führungsvorrichtung (12) verbundenen Betätigungsvorrichtung (10), wobei die Extraktionsvorrichtung zumindest teilweise in der Führungsvorrichtung geführt ist, **dadurch gekennzeichnet, dass** die Extraktionsvorrichtung (24) gehalten wird, während die Führungsvorrichtung (12) verfahren wird.

2. Verfahren nach Anspruch 1, **dadurch gekennzeichnet, dass** die Betätigungsvorrichtung (10) von einer ersten Position, in welcher die Extraktionsvorrichtung (24) nicht über ein distales Ende der Führungsvorrichtung (12) hinausragt, in eine zweite Position, in welcher die Extraktionsvorrichtung (24) zumindest teilweise über ein distales Ende der Führungsvorrichtung (12) hinausragt, überführt wird.

3. Verfahren nach Anspruch 2, **dadurch gekennzeichnet, dass** die Betätigungsvorrichtung (10) mit einem Motorantrieb von der ersten Position zur zweiten Position überführt wird.

4. Verfahren nach einem der Ansprüche 1 bis 3, **dadurch gekennzeichnet, dass** die Betätigungsvorrichtung (10) von einer zweiten Position, in welcher die Extraktionsvorrichtung (24) zumindest teilweise über ein distales Ende der Führungsvorrichtung (12) hinausragt, in eine erste Position, in welcher die Extraktionsvorrichtung (24) nicht über ein distales Ende der Führungsvorrichtung (12) hinausragt, motorisch verfahren wird.

5. Anordnung (1, 100) zur Durchführung einer Festphasenmikroextraktion, umfassend
- eine Vorrichtung (1) umfassend eine Betätigungsvorrichtung (10), verbunden mit einer Führungsvorrichtung (12) und eine Haltevorrichtung (20) verbunden mit einer Extraktionsvorrichtung (24), wobei die Extraktionsvorrichtung (24) zumindest teilweise in der Führungsvorrichtung (12) geführt ist und wobei die Extraktionsvorrichtung (24) relativ zur Führungsvorrichtung (12) mittels einer Betätigung der Betätigungsvorrichtung (10) verfahrbar ist, sowie
- einen Adapter (100) zur Aufnahme der Vorrichtung (1) und zur Montage an eine Werkzeughalterung, insbesondere an eine Werkzeughalterung eines automatischen Analysengeräts, wobei der Adapter (100) eine Befestigungsvorrichtung zum Befestigen der Haltevorrichtung (20) und eine Kopplungsvorrichtung zum Ankoppeln des Werkzeugs (200) an die Werkzeughalterung umfasst, wobei die Haltevorrichtung (20) mit der Befestigungsvorrichtung am Adapter (100) befestigt ist.

6. Anordnung (1, 100) nach Anspruch 5, **dadurch gekennzeichnet, dass** die Betätigungsvorrichtung (10) ein Betätigungselement (13) und die Haltevorrichtung (20) ein Halteelement (22) umfasst, wobei in einer Längsrichtung der Vorrichtung (1) das Betätigungselement (13) proximal zum Halteelement (22) angeordnet ist.

7. Anordnung (1, 100) nach Anspruch 6, **dadurch gekennzeichnet, dass** die Haltevorrichtung (20) am Betätigungselement (13) geführt ist.

8. Anordnung (1, 100) nach einem der Ansprüche 6 oder 7, **dadurch gekennzeichnet, dass** die Führungsvorrichtung (12) als Kanüle und die Extraktionsvorrichtung (24) als Fiber ausgebildet sind und die Betätigungsvorrichtung (10) einen Zylinder (10) umfasst, in welchem die Haltevorrichtung (20) in Längsrichtung verfahrbar ist.

9. Anordnung (1, 100) nach Anspruch 8, **dadurch gekennzeichnet, dass** der Zylinder über ein Befestigungselement (11) mit dem Betätigungselement (13) verbunden ist, wobei das Befestigungselement (11) insbesondere in einem proximalen Bereich des Zylinders (10) an einer Innenseite des Zylinders (10) angeordnet ist und vorzugsweise radial nach innen ragt.

10. Anordnung (1, 100) nach Anspruch 9, **dadurch gekennzeichnet, dass** die Haltevorrichtung (20) als Stössel mit einem axial verlaufenden Schlitz (21) für das Befestigungselement (11) und einer axialen, vorzugsweise zentralen, Bohrung (23) für das Betätigungselement (13) der Betätigungsvorrichtung (10) ausgebildet ist.

11. Anordnung (1, 100) nach einem der Ansprüche 5 - 10, **dadurch gekennzeichnet, dass** während der Betätigung der Betätigungsvorrichtung (10) die Betätigungsvorrichtung (10) relativ zur Haltevorrichtung (20) verfahrbar ist und die Haltevorrichtung (20) relativ zur Werkzeughalterung fixiert ist.

12. Anordnung (1, 100) nach einem der Ansprüche 5 - 11, **dadurch gekennzeichnet, dass** die Betätigungsvorrichtung (10) in einer Betätigungsrichtung motorisch betätigbar ist.

## Claims

1. Method for performing a solid-phase micro-extraction with a holding device (20) which is holding an extraction device (24) and which is secured on an adapter (100), connected to the extraction device (24) and an actuating device (10) connected to a guide device (12), wherein the extraction device is at least partially guided in the guide device, **characterized in that**, the extraction device (24) is held, while the guide device (12) is moved.

2. Method according to Claim 1, **characterized in that** the actuating device (10) is transferred from a first position, in which the extraction device (24) does not protrude beyond a distal end of the guide device (12), to a second position, in which the extraction device (24) protrudes at least partially beyond a distal end of the guide device (12).

3. Method according to Claim 2, **characterized in that** the actuating device (10) is transferred from the first position to the second position with a motor drive.

4. Method according to one of Claims 1 to 3, **characterized in that** the actuating device (10) is moved by motor from a second position, in which the extraction device (24) protrudes at least partially beyond a distal end of the guide device (12), to a first position, in which the extraction device (24) does not protrude beyond a distal end of the guide device (12).

5. Arrangement (1, 100) for performing a solid-phase micro-extraction, comprising
- a device (1) comprising an actuating device (10) connected to a guide device (12), and a holding device (20) connected to an extraction device (24), wherein the extraction device (24) is guided at least partially in the guide device (12), and wherein the extraction device (24) is movable relative to the guide device (12) by means of an actuation of the actuating device (10), and
- an adapter (100) for receiving a device (1) and for mounting on a tool holder, in particular on a tool holder of an automatic analysis appliance, wherein the adapter (100) comprises a securing device for securing the holding device (20) and a coupling device for coupling the tool (200) to the tool holder, wherein the holding device (20) with the securing device is attached to the adapter (100).

6. Arrangement (1, 100) according to Claim 5, **characterized in that** the actuating device (10) comprises an actuating element (13) and the holding device (20) comprises a holding element (22), wherein the actuating element (13) is arranged proximally to the holding element (22) in a longitudinal direction of the device (1).

7. Arrangement (1, 100) according to Claim 6, **characterized in that** the holding device (20) is guided on the actuating element (13).

8. Arrangement (1, 100) according to one of Claims 6 or 7, **characterized in that** the guide device (12) is designed as a needle and the extraction device (24) is designed as a fiber, and the actuating device (10) comprises a barrel (10) in which the holding device (20) is movable in the longitudinal direction.

9. Arrangement (1, 100) according to Claim 8, **characterized in that** the barrel is connected to the actuating element (13) via a securing element (11), wherein the securing element (11) is arranged in particular in a proximal area of the barrel (10), on an inner face of the barrel (10), and preferably protrudes radially inward.

10. Arrangement (1, 100) according to Claim 9, **characterized in that** the holding device (20) is designed as a plunger with an axially extending slit (21) for the securing element (11) and with an axial, preferably central bore (23) for the actuating element (13) of the actuating device (10).

11. Arrangement (1, 100) according to one of Claims 5 - 10, **characterized in that**, during the actuation of the actuating device (10), the actuating device (10) is movable relative to the holding device (20), and the holding device (20) is fixed relative to the tool holder.

12. Arrangement (1, 100) according to one of Claims 5 - 11, **characterized in that** the actuating device (10) can be actuated by motor in an actuation direction.

## Revendications

1. Procédé pour la réalisation d'une micro-extraction en phase solide avec un dispositif de maintien (20) portant un dispositif d'extraction (24) et fixé à un adaptateur (100), relié au dispositif d'extraction (24) et à un dispositif d'actionnement (10) relié à un dispositif de guidage (12), dans lequel le dispositif d'extraction est guidé au moins partiellement dans le dispositif de guidage, **caractérisé en ce que** l'on maintien le dispositif d'extraction (24) pendant que l'on déplace le dispositif de guidage (12).

2. Procédé selon la revendication 1, **caractérisé en ce que** l'on fait passer le dispositif d'actionnement (10) d'une première position, dans laquelle le dispositif d'extraction (24) ne dépasse pas au-delà d'une extrémité distale du dispositif de guidage (12), à une deuxième position, dans laquelle le dispositif d'extraction (24) dépasse au moins partiellement au-delà d'une extrémité distale du dispositif de guidage (12).

3. Procédé selon la revendication 2, **caractérisé en ce que** l'on fait passer le dispositif d'actionnement (10) de la première position à la deuxième position à l'aide d'un entraînement motorisé.

4. Procédé selon l'une quelconque des revendications 1 à 3, **caractérisé en ce que** l'on déplace le dispositif d'actionnement (10) de façon motorisée d'une deuxième position, dans laquelle le dispositif d'extraction (24) dépasse au moins partiellement au-delà d'une extrémité distale du dispositif de guidage (12), à une première position, dans laquelle le dispositif d'extraction (24) ne dépasse pas au-delà d'une extrémité distale du dispositif de guidage (12).

5. Agencement (1, 100) pour réaliser une micro-extraction en phase solide, comprenant:
- un dispositif (1) comprenant un dispositif d'actionnement (10), relié à un dispositif de guidage (12), et un dispositif de maintien (20), relié à un dispositif d'extraction (24), dans lequel le dispositif d'extraction (24) est guidé au moins partiellement dans le dispositif de guidage (12) et dans lequel le dispositif d'extraction (24) est déplaçable par rapport au dispositif de guidage (12) au moyen d'un actionnement du dispositif d'actionnement (10), ainsi que
- un adaptateur (100) destiné à recevoir le dispositif (1) et à être monté sur un porte-outil, en particulier sur un porte-outil d'un appareil d'analyse automatique, dans lequel l'adaptateur (100) comprend un dispositif de fixation pour la fixation du dispositif de maintien (20) et un dispositif de couplage pour le couplage de l'outil (200) au porte-outil, dans lequel le dispositif de maintien (20) est fixé à l'adaptateur (100) avec le dispositif de fixation.

6. Agencement (1, 100) selon la revendication 5, **caractérisé en ce que** le dispositif d'actionnement (10) comprend un élément d'actionnement (13) et le dispositif de maintien (20) comprend un élément de maintien (22), dans lequel l'élément d'actionnement (13) est disposé en position proximale par rapport à l'élément de maintien (22) dans la direction longitudinale du dispositif (1).

7. Agencement (1, 100) selon la revendication 6, **caractérisé en ce que** le dispositif de maintien (20) est guidé sur l'élément d'actionnement (13).

8. Agencement (1, 100) selon une des revendications 6 ou 7, **caractérisé en ce que** le dispositif de guidage (12) est réalisé sous forme de canule et l'élément d'extraction (24) sous forme de fibre et le dispositif d'actionnement (10) comprend un cylindre (10), dans lequel le dispositif de maintien (20) est déplaçable en direction longitudinale.

9. Agencement (1, 100) selon la revendication 8, **caractérisé en ce que** le cylindre est relié à l'élément d'actionnement (13) par l'intermédiaire d'un élément de fixation (11), dans lequel l'élément de fixation (11) est disposé en particulier dans une région proximale du cylindre (10) sur un côté intérieur du cylindre (10) et pénètre de préférence radialement vers l'intérieur.

10. Agencement (1, 100) selon la revendication 9, **caractérisé en ce que** le dispositif de maintien (20) est réalisé sous forme de poussoir avec une fente (21) s'étendant axialement pour l'élément de fixation (11) et un alésage axial, de préférence central, (23) pour l'élément d'actionnement (13) du dispositif d'actionnement (10).

11. Agencement (1, 100) selon l'une quelconque des revendications 5 à 10, **caractérisé en ce que**, pendant l'actionnement du dispositif d'actionnement (10), le dispositif d'actionnement (10) est déplaçable par rapport au dispositif de maintien (20) et le dispositif de maintien (20) est fixé par rapport au porte-outil.

12. Agencement (1, 100) selon l'une quelconque des revendications 5 à 11, **caractérisé en ce que** le dispositif d'actionnement (10) peut être actionné de façon motorisée dans une direction d'actionnement.
